# EUROPÄISCHE PATENTSCHRIFT

(11) **EP 1 193 174 B1**
(45) Veröffentlichungstag und Bekanntmachung des Hinweises auf die Patenterteilung: **18.08.2004**
(21) Anmeldenummer: 01122620.6
(22) Anmeldetag: 27.09.2001
(51) Int. Cl.: B64F 1/32

(54) **Versorgungsfahrzeug mit austauschbarem Aufbau und separater Bedienstation**
Service vehicle with interchangeable superstructure and separate operator station
Véhicule de service avec superstructure interchangable et poste d'opérateur séparé

(30) Priorität: 29.09.2000 DE 20016874 U
(43) Veröffentlichungstag der Anmeldung: 03.04.2002
(73) Patentinhaber: KÖGEL KAMAG Transporttechnik GmbH & Co. KG, 89079 Ulm (DE)
(72) Erfinder: Haupt, Jürgen, 89264 Weissenhorn/Bubenhausen (DE)
(74) Vertreter: HOFFMANN - EITLE

(56) Entgegenhaltungen:
- EP-A- 0 324 083
- DE-A- 3 509 021
- DE-U- 20 019 572
- US-A- 2 412 158

## Beschreibung

### Technisches Gebiet

Die Erfindung betrifft ein Versorgungsfahrzeug, insbesondere ein Versorgungsfahrzeug zum Be- und Entladen von Flugzeugen, das ein Fahrerhaus aufweist sowie eine Ladefläche, auf der ein Kofferaufbau anbringbar ist, und eine Bedieneinrichtung, von der aus zumindest das Anheben des Kofferaufbaus von der Ladefläche und das Absenken des Kofferaufbaus auf die Ladefläche steuerbar ist.

Solche Versorgungsfahrzeuge werden beispielsweise im Catering-Bereich von Fluglinien verwendet, um fertig zubereitete Lebensmittel zur Versorgung von Fluggästen und der Besatzung von einer Küche zu einem Flugzeug zu transportieren.

### Stand der Technik

Bekannt sind Versorgungsfahrzeuge zum Be- und Entladen von Flugzeugen mit einer Ladefläche sowie einem auf dieser Ladefläche angeordneten Kofferaufbau, der die Ladung aufnimmt und der vertikal anhebbar ist, um die Höhe des Kofferaufbaus an die Höhe des zu beladenen Flugzeugs o.ä. anzupassen. Der Kofferaufbau ist dabei fester Bestandteil des Versorgungsfahrzeugs. Meist weisen die bekannten Versorgungsfahrzeuge eine Übergabeplattform auf, die oberhalb des Fahrerhauses angeordnet ist und über die die Ladung aus dem Kofferaufbau in das Flugzeug umgeladen werden kann. Wenn der Kofferaufbau angehoben wird, wird diese Übergabeplattform meist über Mitnehmer ebenfalls angehoben, so dass sich die Bodenfläche der Übergabeplattform und die Bodenfläche des Kofferaufbaus zum Be- oder Entladen des Flugzeugs auf einem Niveau befinden.

Das Anheben und Absetzen des Kofferaufbaus wird über eine Bedieneinrichtung gesteuert, die sich bei den bekannten Fahrzeugen innerhalb des Kofferaufbaus befindet und über eine Tür in dem Kofferaufbau zugänglich ist. Der Fahrzeugführer muss daher den Kofferaufbau betreten, um dessen Bewegung zu steuern. Dies bringt jedenfalls Schmutz in den Kofferaufbau, und im Falle eines gekühlten Kofferaufbaus besteht zudem eine starke Gesundheitsgefährdung für den Fahrzeugführer.
Abgesehen davon hat im Falle eines gekühten Kofferaufbaus jedes Öffnen der Tür im Kofferaufbau einen Kälteverlust zur Folge.

US 2 412 158 A beschreibt ein Fahrsorgungsfahrzeug zum Beund Entladen von Flugzeugen gemäß dem Oberbegriff des Anspruchs 1. Es weist ein Fahrerhaus auf sowie eine Ladefläche, auf der ein Kofferaufbau anbringbar ist, und eine Bedieneinrichtung, von der aus zumindest das Anheben des Kofferbaus von der Ladefläche und das Absenken des Kofferbaus auf die Ladefläche steuerbar ist. Die Bedieneinrichtung, deren Betätigungsstange sich in die Fahrerkabine hinein erstreckt, ist fester Bestandteil des Versorgungsfahrzeugs. Der Kofferaufbau ist ein Wechselkoffer und somit vollständig von dem Versorgungsfahrzeug und auch von der
Bedieneinrichtung trennbar; an diesem Wechselkoffer kann eine Übergabeplattform vorgesehen sein, die mit ihm zusammen angehoben wird.

### Darstellung der Erfindung

Der Erfindung liegt die Aufgabe zugrunde, ein flexibler einsetzbares Versorgungsfahrzeug und insbesondere ein flexibler einsetzbares Versorgungsfahrzeug zum Be- und Entladen von Flugzeugen zu schaffen.

Die Lösung dieser Aufgabe erfolgt durch das im Patentanspruch 1 beschriebene Versorgungsfahrzeug.

Demzufolge ist die Übergabeplattform stets oberhalb des Fahrerhauses angeordnet und so an dem Versorgungsfahrzeug angebracht, dass sie beim Anheben des Kofferaufbaus über eine bestimmte Höhe hinaus ebenfalls angehoben wird, wobei der Kofferaufbau vollständig von dem Versorgungsfahrzeug mit der Bedieneinrichtung und der Übergabeplattform trennbar ist.

Die Übergabeplattform ist in Tränsportstellung des Fahrzeugs. oberhalb des Fahrerhauses angeordnet und die außerdem so an dem Versorgungsfahrzeug angebracht, dass sie sich beim Anheben des Kofferaufbaus nach oben bewegt, sobald die Bodenfläche des Kofferaufbaus sich auf dem gleichen Niveau befindet wie die Übergabeplattform. Zum Be- und Entladen eines Flugzeugs befindet sich die Übergabeplattform dann stets auf dem gleichen Niveau wie die Bodenfläche des Kofferaufbaus.

Ein erfindungsgemäßes Versorgungsfahrzeug kann je nach Einsatzfall unterschiedliche Kofferaufbauten aufnehmers. Neben gekühlten und ungekühlten Kofferaufbauten kann ggf. auch eine Serviceplattform zur Wartung von Flugzeugen auf dem erfindungsgemäßen Fahrzeug angebracht werden.

Die Anordnung der Bedieneinrichtung und Übergabeplattform getrennt von dem Kofferaufbau bietet den Vorteil, dass nicht für jeden Kofferaufbau eine eigene Bedieneinrichtung und Übergabeplattform vorgesehen sein muss, sondern dass eine an einem erfindungsgemäßen Versorgungsfahrzeug angebrachte Bedieneinrichtung zur Steuerung jedes aktuell auf dem Fahrzeug angebrachten Kofferaufbaus verwendet werden kann und die Übergabeplattform stets am Fahrzeug verbleiben kann. Da die Bedieneinrichtung außerdem nicht mehr innerhalb des Kofferaufbaus angeordnet ist, entfällt die Notwendigkeit, den Kofferaufbau zum Bedienen zu betreten; es wird also weder Schmutz in den Kofferaufbau getragen, noch geht im Falle eines gekühlten Kofferaufbaus Kälte verloren. Darüber hinaus besteht selbst im Falle eines gekühlten Kofferaufbaus keine Gesundheitsgefährdung mehr für den Fahrzeugführer.

Abgesehen vom Catering- und Service-Bereich kann das erfindungsgemäße Fahrzeugs beispielsweise auch für den Behindertentransport, für den Sitztransport oder als VIP-Lounge verwendet werden.

Weitere vorteilhafte Ausgestaltungen der Erfindung sind in den Unteransprüchen beschrieben.

Das Anheben und Absenken des Kofferaufbaus auf der Ladefläche erfolgt vorzugsweise mittels einer Hubschere. Diese Hubschere ist Bestandteil des Versorgungsfahrzeugs und daher ebenfalls von dem austauschbaren Kofferaufbau trennbar, so dass nicht für jeden Kofferaufbau eine Hubschere vorgesehen werden muss. Ein Catering-Unternehmen braucht daher lediglich ein erfindungsgemäßes Versorgungsfahrzeug samt Hubschere und Bedieneinrichtung anzuschaffen, um unterschiedliche Kofferaufbauten transportieren zu können.

Die Bedieneinrichtung kann Teil einer Bedienplattform sein, die sich zwischen dem Fahrerhaus und dem austauschbaren Kofferaufbau befindet. Von einer solchen Bedienplattform aus hat der Fahrzeugführer einen guten Überblick über die Fahrzeugumgebung. Vorzugsweise ist die Bedienplattform so an dem Fahrzeug angebracht, dass sie beim Anheben des Kofferaufbaus ebenfalls angehoben wird, so dass die Bodenfläche der Bedienplattform und die Bodenfläche des Kofferaufbaus sich immer auf einem Niveau befinden.

### Kurze Beschreibung der Zeichnungen

Nachfolgend wird die Erfindung anhand einer beispielhaft in den Zeichnungen dargestellten Ausführungsform näher erläutert.

Im einzelnen zeigt:
- Fig. 1: ein erfindungsgemäßes Versorgungsfahrzeug samt Kofferaufbau in abgesenkter Stellung,
- Fig. 2: ein erfindungsgemäßes Versorgungsfahrzeug samt Kofferaufbau in angehobener Stellung,
- . Fig. 3: ein erfindungsgemäßes Versorgungsfahrzeug, und
- Fig. 4: einen austauschbaren Kofferaufbau.

### Beschreibung einer bevorzugten Ausführungsform der Erfindung

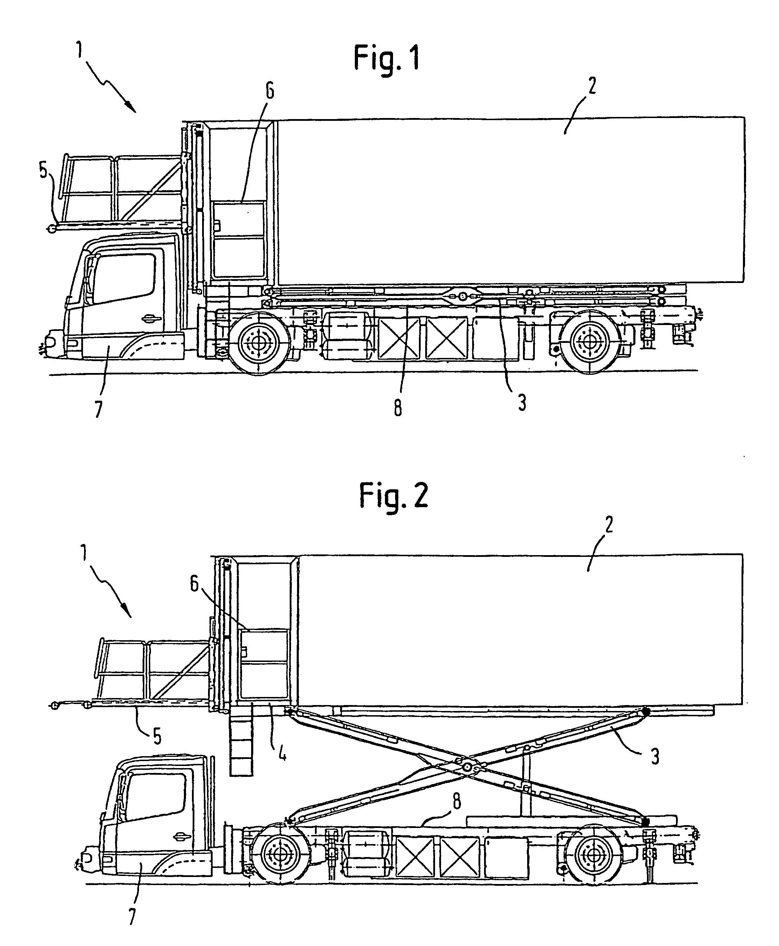

Fig. 1 zeigt ein erfindungsgemäßes Versorgungsfahrzeug 1, auf dem sich ein Kofferaufbau 2 befindet. Das Versorgungsfahrzeug 1 verfügt außerdem über ein Fahrerhaus 7, eine Ladefläche 8 sowie über eine Hubschere 3, die zum Anheben des Kofferaufbaus 2 dient, wie insbesondere aus Fig. 2 ersichtlich ist. Eine Bedienplattform 4 und eine Übergabeplattform 5 sind ebenfalls feste Bestandteile des erfindungsgemäßen Fahrzeugs 1 und werden beim Ausfahren der Hubschere 3 ebenfalls angehoben, wie in Fig. 2 gezeigt. Im angehobenen Zustand liegen die Bodenfläche des Kofferaufbaus 2, die Bodenfläche der Bedienplattform 4 sowie die Übergabeplattform 5 auf einem Niveau. Die Bedienplattform 4 verfügt in dieser Ausführungsform über ein Gittertor 6, das verhindert, dass der Fahrzeugführer von der Bedienplattform 4 herunterfallen kann.

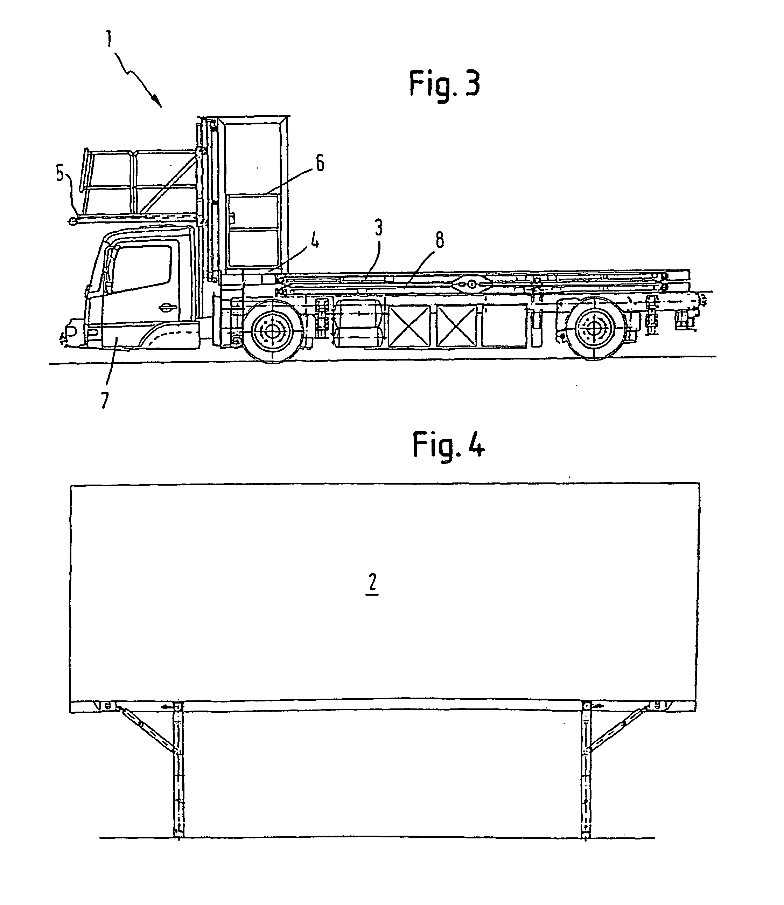

Fig. 3 zeigt das erfindungsgemäße Versorgungsfahrzeug 1 samt Hubschere 3, Bedienplattform 4 und Übergabeplattform 5. Hier wird noch einmal deutlich, dass Hubschere 3, Bedienplattform 4 und Übergabeplattform 5 Bestandteil des erfindungsgemäßen Fahrzeugs sind, nicht jedoch ein Kofferaufbau.

Fig. 4 zeigt schematisch einen Kofferaufbau 2, der auf das in Fig. 3 dargestellte erfindungsgemäße Fahrzeug aufgeladen werden könnte.

## Patentansprüche

1. Versorgungsfahrzeug (1), insbesondere Versorgungsfahrzeug (1) zum Be- und Entladen von Flugzeugen, das ein Fahrerhaus (7) aufweist sowie eine Ladefläche (8), auf der ein Kofferaufbau (2) anbringbar ist, und eine Bedieneinrichtung, von der aus zumindest das Anheben des Kofferaufbaus (2) von der Ladefläche (8) und das Absenken des Kofferaufbaus (2) auf die Ladefläche (8) steuerbar ist, wobei die Bedieneinrichtung fester Bestandteil des Versorgungsfahrzeugs (1) ist,
und wobei das Versorgungsfahrzeug (1) eine Übergabeplattform (5) aufweist,
**dadurch gekennzeichnet, dass**
die Übergabeplattform (5) stets oberhalb des Fahrerhauses (7) angeordnet ist und so an dem Versorgungsfahrzeug (1) angebracht ist, dass sie beim Anheben des Kofferaufbaus (2) über eine bestimmte Höhe hinaus ebenfalls angehoben wird, wobei der Kofferaufbau (2) vollständig von dem Versorgungsfahrzeug (1) mit der Bedieneinrichtung und der Übergabeplattform (5) trennbar ist.

2. Versorgungsfahrzeug (1) nach Anspruch 1, **dadurch gekennzeichnet, dass** das Versorgungsfahrzeug (1) zum Zweck des Anhebens und Absenkens des Kofferaufbaus (2) mit einer Hubschere (3) ausgestattet ist.

3. Versorgungsfahrzeug (1) nach einem der vorangehenden Ansprüche, **dadurch gekennzeichnet, dass** die Bedieneinrichtung auf oder an einer Bedienplattform (4) angebracht ist, die sich zwischen dem Fahrerhaus (7) des Versorgungsfahrzeugs (1) und dem Kofferaufbau (2) befindet.

4. Versorgungsfahrzeug (1) nach einem der vorangehenden Ansprüche, **dadurch gekennzeichnet, dass** die Bedienplattform (4) so an dem Versorgungsfahrzeug (1) angebracht ist, das sie beim Anheben des Kofferaufbaus (2) ebenfalls angehoben wird.

## Claims

1. Supply vehicle (1), in particular supply vehicle (1) for loading and unloading aircraft, having a driver's cab (7) and a loading area (8) on which a box body (2) can be mounted and an operating device from which at least the lifting of the box body (2) from the loading area (8) and the lowering of the box body (2) on to the loading area (8) can be controlled, the operating device being a fixed component of the supply vehicle (1) and the supply vehicle (1) having a delivery platform (5),
**characterised in that** the delivery platform (5) is always arranged above the driver's cab (7) and is mounted on the supply vehicle (1) in such a way that when the box body (2) is lifted above a certain height it is also lifted, the box body (2) being completely separable from the supply vehicle (1) with the operating device and the delivery platform (5).

2. Supply vehicle (1) according to claim 1, **characterised in that** the supply vehicle (1) is fitted with a lifting bracket (3) for the purpose of lifting and lowering the box body (2).

3. Supply vehicle (1) according to one of the preceding claims, **characterised in that** the operating device is mounted on top of or on the side of an operating platform (4) located between the driver's cab (7) of the supply vehicle (1) and the box body (2).

4. Supply vehicle (1) according to one of the preceding claims, **characterised in that** the operating platform (4). is mounted on the supply vehicle (1) in such a way that when the box body (2) is lifted it is also lifted.

## Revendications

1. Véhicule de service (1), en particulier véhicule de service (1) pour le chargement et le déchargement d'avions, présentant une cabine de conducteur (7) ainsi qu'une surface de chargement (8) à laquelle une structure à bagages (2) est susceptible d'être rapportée, et un dispositif de manoeuvre, d'où au moins le levage de la structure à bagages (2) vis-à-vis de la surface de chargement (8) et l'abaissement de la structure à bagages (2) sur la surface de chargement (8), peuvent être commandés, le dispositif de manoeuvre étant un composant fixe du véhicule de service (1), et le véhicule de service (1) présentant une plate-forme de transfert,
**caractérisé en ce que**
la plate-forme de transfert (5) est en permanence disposée au-dessus de la cabine de conducteur (7) et montée sur le véhicule de service (1), de manière que, lors du levage de la structure à bagages (2), elle soit également levée de la valeur d'une hauteur déterminée, sachant que la structure à bagages (2) est susceptible d'être complètement séparée du véhicule de service (1) muni du dispositif de manoeuvre et de la plate-forme de transfert (5).

2. Véhicule de service (1) selon la revendication 1, **caractérisé en ce que** le véhicule de service (1) est équipé d'un pantographe de levage (3), dans le but d'effectuer le levage et l'abaissement de la structure à bagages (2).

3. Véhicule de service (1) selon l'une des revendications précédentes, **caractérisé en ce que** le dispositif de service est monté sur ou dans une plate-forme de manoeuvre (4), qui se trouve entre la cabine de conducteur (7) du véhicule de service (1) et la structure à bagages (2).

4. Véhicule de service (1) selon l'une des revendications précédentes, **caractérisé en ce que** la plate-forme de manoeuvre (4) est montée sur le véhicule de service (1) , de manière qu'elle soit également levée lors de la levée de la structure à bagages (2).
